# EUROPEAN PATENT SPECIFICATION

(11) **EP 3 902 375 B1**
(45) Date of publication and mention of the grant of the patent: **20.09.2023**
(21) Application number: 19907963.3
(22) Date of filing: 11.12.2019
(51) Int. Cl.: H05B 6/62, H05B 6/46, B65D 81/34

(54) **HEATING DEVICE**
HEIZVORRICHTUNG
DISPOSITIF DE CHAUFFAGE

(30) Priority: 04.01.2019 CN 201910009518
(43) Date of publication of application: 27.10.2021
(73) Proprietor: Haier Smart Home Co., Ltd., Qingdao, Shandong 266101 (CN)
(72) Inventor: WANG, Haijuan, Qingdao, Shandong 266101 (CN); ZHAO, Kunkun, Qingdao, Shandong 266101 (CN); LI, Peng, Qingdao, Shandong 266101 (CN); ZHU, Xiaobing, Qingdao, Shandong 266101 (CN)
(74) Representative: Ziebig Hengelhaupt Intellectual Property Attorneys Patentanwaltsanwaltskanzlei PartGmbB
(86) International application number: PCT/CN2019/124657
(87) International publication number: WO 2020/140712

(56) References cited:
- CN-U- 207 247 701
- CN-U- 207 881 331
- US-A1- 2008 230 176
- US-A1- 2016 219 653
- US-B1- 6 682 764

## Description

### Technical Field

The present invention relates to kitchen appliances, and particularly relates to an electromagnetic wave heating device.

### Background Art

In the freezing process of food, the quality of the food is maintained, but the frozen food needs to be thawed before processing or eating. In the prior art, the food is generally thawed by an electromagnetic wave device (such as a microwave oven).

CN 207881331 U teaches a defrosting device and a refrigerator having the thawing device, wherein the defrosting device is provided, comprising: a barrel defining a defrosting chamber for placing the object to be treated; a device door disposed at the pick-and-place port of the defrosting chamber for opening and closing the pick-and-place port; a radio frequency generating module configured to generate a radio frequency signal; and an RF antenna being disposed at an inner wall of the defrosting chamber and electrically connected to the radio frequency generating module to generate a radio frequency wave of a corresponding frequency in the defrosting chamber according to the radio frequency signal, and thaw the defrosting chamber.

CN 207247701 U discloses a refrigerator comprising a box defining at least one storage compartment, a compartment door for opening and closing the storage opening of each of the storage compartments, wherein the thawing apparatus comprises: a barrel defining a thawing chamber for placing the object to be treated; a door body of the device being disposed at a take-out opening of the thawing chamber, and is used for opening and closing a take-out opening of the thawing chamber; an RF generation module configured to generate a radio frequency signal; and a radio frequency antenna being disposed at an inner wall of the thawing chamber, and being electrically connected with the radio frequency generating module, so as to generate a radio frequency wave of a corresponding frequency in the thawing chamber according to the radio frequency signal, and thereby thaw the thawing chamber.

The radio frequency antenna is configured to be electrically connected to the radio frequency generating module through a smoothly extending electrical connection, so as to reduce electromagnetic loss of the radio frequency wave at the electrical connection line.

US 2016/0219653 A1 discloses a cooking apparatus comprising an input part configured to receive a plate warming mode command; a microwave heating part configured to radiate microwave to at least one plate disposed in a cooking chamber provided inside the cooking apparatus; and a control part configured to control at least one of an operation time of the microwave heating part and an intensity of the microwave radiated from the microwave heating part when the plate warming mode command is input.

In order to facilitate the cleaning of the electromagnetic wave device, object carrying vessels, such as trays, are usually placed in a heating chamber to carry the food, but the ability of the object carrying vessels to absorb electromagnetic waves will indirectly affect the thawing efficiency of the food. If the object carrying vessels have a stronger ability to absorb electromagnetic waves, there will be less electromagnetic waves acting on the food, and the thawing efficiency of the food will be lower. If the object carrying vessels have a weaker ability to absorb electromagnetic waves, there will be more electromagnetic waves acting on the food, and the thawing efficiency of the food will be higher.

### Summary of the Invention

An objective of the present invention is to provide an electromagnetic wave heating device in view of the above defects in the prior art, wherein plastic components in the electromagnetic wave heating device have a relatively weak ability to absorb electromagnet waves.

A further objective of the present invention is to improve the assembly efficiency of the heating device.

Another further objective of the present invention is to improve the heating efficiency. Specifically, the present invention provides a heating device according to claim 1.

Optionally, the antenna housing is disposed at a bottom of the cylinder body, and the radiating antenna is horizontally fixed on a lower surface of the antenna housing.

Optionally, the radiating antenna is disposed at a height of 1/3 to 1/2 of the cylinder body.

Optionally, the radiating antenna is provided with a plurality of engaging holes; and
the antenna housing is correspondingly provided with a plurality of buckles, and the plurality of buckles are configured to respectively pass through the plurality of engaging holes to be engaged with the radiating antenna, wherein
each of the buckles is composed of two barbs disposed at an interval and in mirror symmetry; or
each of the buckles is composed of a fixing part perpendicular to the radiating antenna and having a hollow middle part, and an elastic part extending inclining to the fixing part from an inner end edge of the fixing part and toward the radiating antenna.

Optionally, the heating device further includes:
a signal processing and measurement and control circuit, configured to be electrically connected with the electromagnetic generating module, and disposed in the electrical appliance chamber and on a rear side of the radiating antenna.

Optionally, the signal processing and measurement and control circuit includes:
a detection unit, connected in series between the electromagnetic generating module and the radiating antenna, and configured to detect specific parameters of an incident wave signal and a reflected wave signal passing through the detection unit;
a control unit, configured to calculate an electromagnetic wave absorption rate of the object to be processed according to the specific parameters; and
a matching unit, connected in series between the electromagnetic generating module and the radiating antenna, and configured to adjust a load impedance of the electromagnetic generating module according to the electromagnetic wave absorption rate.

Since the plastic components in the heating device of the present invention are made of a non-transparent PP material, the absorption amount of the electromagnetic waves by the plastic components is reduced, and the ratio of the electromagnetic waves acting on the object to be processed is indirectly increased, thereby improving the heating efficiency of the heating device.

Specifically, the inventor of the present application uses a non-transparent material to manufacture the plastic components in the cylinder body, thereby overcoming the technical prejudices in the prior art. For many years, those skilled in the art have believed that only plastic components made of transparent materials will reduce the absorption amount of the electromagnetic waves by object carrying vessels, which is just confirmed by the fact that all of the existing microwave ovens use transparent trays, transparent turntables, etc. to carry the objects to be processed.

Further, the radiating antenna is covered and fixed through the antenna housing in the heating device of the present invention, which not only can separate the object to be processed from the radiating antenna to prevent the radiating antenna from being dirty or damaged by accidental touch, but also can simplify the assembly process of the heating device to facilitate the positioning and installation of the radiating antenna.

Further, in the present invention, the antenna housing is disposed at the height of 1/3 to 1/2 of the cylinder body, which not only can avoid the damage to the antenna housing and the radiating antenna due to the fact that a user places an object to be processed with excessive height, but also can make the electromagnetic waves in the heating chamber have a relatively high energy density so that the object to be processed is quickly heated.

Further, in the present invention, the load impedance of the electromagnetic generating module is adjusted by the matching unit so as to improve a matching degree between the output impedance and the load impedance of the electromagnetic generating module, so that when foods with different fixed attributes (such as type, weight and volume) are placed in the heating chamber, or during the temperature change of the foods, relatively more electromagnetic wave energy is radiated in the heating chamber.

According to the following detailed descriptions of specific embodiments of the present invention in conjunction with the drawings, those skilled in the art will more clearly understand the above and other objectives, advantages and features of the present invention.

### Brief Description of the Drawings

Some specific embodiments of the present invention are described in detail below with reference to the drawings by way of example and not limitation. The same reference numerals in the drawings indicate the same or similar components or parts. Those skilled in the art should understand that these drawings are not necessarily drawn in scale. In figures:
Figure 1 is a schematic structural view of a heating device according to one embodiment of the present invention.
Figure 2 is a schematic cross-sectional view of the heating device as shown in Figure 1, wherein an electromagnetic generating module and a power supply module are omitted.
Figure 3 is a schematic enlarged view of a region A in Figure 2.
Figure 4 is a schematic structural view of an electrical appliance chamber according to one embodiment of the present invention.
Figure 5 is a schematic enlarged view of a region B in Figure 4.
Figure 6 is a schematic structural view of an electrical appliance chamber according to another embodiment of the present invention.
Figure 7 is a schematic enlarged view of a region C in Figure 6.

### Detailed Description of the Invention

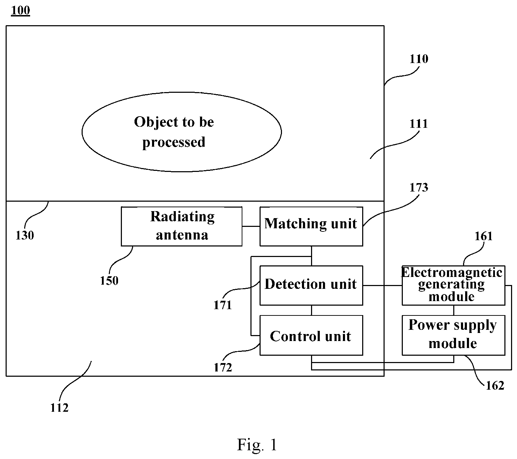

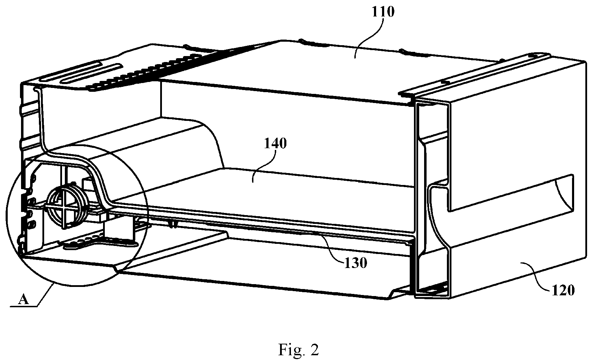

Figure 1 is a schematic structural view of a heating device 100 according to one embodiment of the present invention. Figure 2 is a schematic cross-sectional view of the heating device 100 as shown in Figure 1, wherein an electromagnetic generating module 161 and a power supply module 162 are omitted. Referring to Figure 1 and Figure 2, the heating device 100 includes a cylinder body 110, a door body 120, an electromagnetic generating module 161, a power supply module 162 and a radiating antenna 150.

The cylinder body 110 is configured to place an object to be processed, and a front wall or a top wall of the cylinder body is provided with a pick-and-place opening for picking and placing the object to be processed. The door body 120 is installed together with the cylinder body 110 by an appropriate method, such as a sliding rail connection, a hinged connection, etc., and is configured to open and close the pick-and-place opening.

In some embodiments, the cylinder body 110 and the door body 120 may be respectively provided with electromagnetic shielding features, so that the door body 120 is conductively connected with the cylinder body 110 when the door body is in a closed state, so as to prevent electromagnetic leakage.

The power supply module 162 may be configured to be electrically connected with the electromagnetic generating module 161 to provide electric energy to the electromagnetic generating module 161, so that the electromagnetic generating module 161 generates electromagnetic wave signals. The radiating antenna 150 may be disposed in the cylinder body 110 and is electrically connected with the electromagnetic generating module 161 to generate electromagnetic waves of corresponding frequencies according to the electromagnetic wave signals, so as to heat the object to be processed in the cylinder body 110.

In some embodiments, the cylinder body 110 may be made of metals to serve as a receiving pole to receive electromagnetic waves generated by the radiating antenna 150. In some other embodiments, a receiving pole plate may be disposed on a side wall of the cylinder body 110 opposite to the radiating antenna 150 to receive electromagnetic waves generated by the radiating antenna 150.

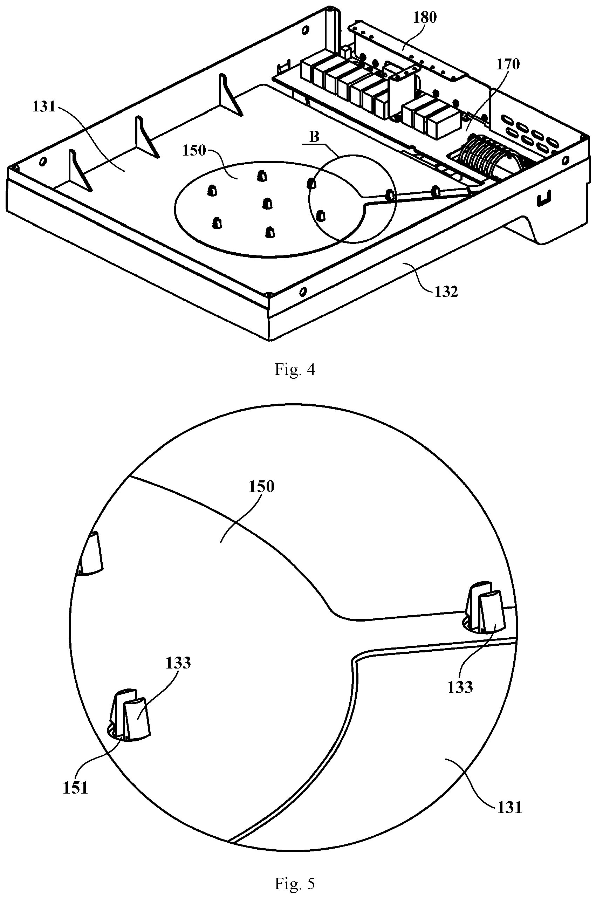

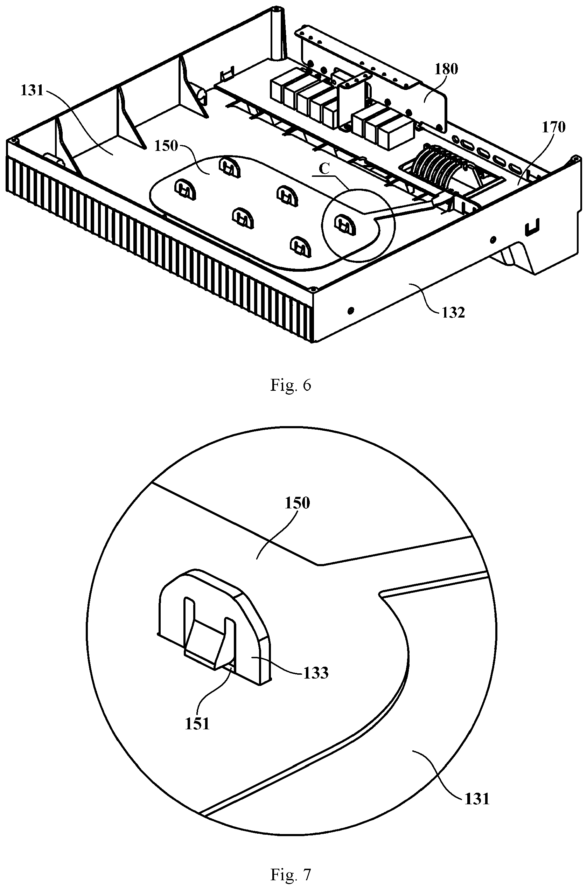

Figure 4 is a schematic structural view of an electrical appliance chamber 112 according to one embodiment of the present invention. Figure 6 is a schematic structural view of the electrical appliance chamber 112 according to another embodiment of the present invention. Referring to Figure 4 and Figure 6, the peripheral edge of the radiating antenna 150 may be formed by smooth curves, so as to make the distribution of electromagnetic waves in the cylinder body 110 more uniform, thereby improving the temperature uniformity of the object to be processed. A smooth curve refers to a curve of which the first derivative of the curve equation is continuous, which means that the peripheral edge of the radiating antenna 150 has no sharp corner in engineering.

Referring to Figure 2 and Figure 4, the heating device 100 includes an antenna housing 130 to separate the inner space of the cylinder body 110 into a heating chamber 111 and an electrical appliance chamber 112. The object to be processed and the radiating antenna 150 are respectively disposed in the heating chamber 111 and the electrical appliance chamber 112 to separate the object to be processed from the radiating antenna 150, so as to prevent the radiating antenna 150 from being dirty or damaged by accidental touch.

In some embodiments, the antenna housing 130 may be made of insulating plastic, so that the electromagnetic waves generated by the radiating antenna 150 may pass through the antenna housing 130 to heat the object to be processed.

According to the invention, the antenna housing 130 may be disposed at the bottom of the cylinder body 110 to avoid the damage to the antenna housing 130 and the radiating antenna 150 due to the fact that a user places an object to be processed with excessive height.

The radiating antenna 150 may be horizontally disposed at the height of 1/3 to 1/2, such as 1/3, 2/5 or 1/2, of the cylinder body 110, so that the volume of the heating chamber 111 is relatively large, and meanwhile, the electromagnetic waves in the heating chamber 111 have a relatively high energy density so as to make the object to be processed heated quickly.

In some embodiments, the object to be processed may be directly placed on the antenna housing 130.

According to the invention, the heating device 100 further includes an object carrying vessel configured to carry the object to be processed. The object carrying vessel may be a tray. When the pick-and-place opening is formed in a front wall of the cylinder body 110, the object carrying vessel may be a plastic drawer 140 having an upward opening. Two lateral side plates of the drawer 140 may be movably connected with the cylinder body 110 by sliding rails, so that the drawer 140 may slide forward and backward so as to be convenient for picking and placing the object to be processed. The front wall of the drawer 140 may be configured to be fixedly connected with the door body 120.

Specifically, in the present invention, the plastic components such as the antenna housing 130 and the drawer 140 are made of non-transparent (translucent or opaque) PP materials to reduce the electromagnetic loss of the electromagnetic waves on the plastic components so as to indirectly increase the ratio of the electromagnetic waves acting on the object to be processed, thereby increasing the heating rate of the object to be processed.

In order to further understand the present invention, the preferred implementation solutions of the present invention are described below in conjunction with more specific embodiments, but the present invention is not limited to these embodiments.

### Embodiment 1

A heating device includes a cylinder body, a door body, a drawer, a radiating antenna, an electromagnetic generating module and an antenna housing covering the antenna, and the radiating antenna is disposed at the height of 1/3 of the cylinder body, wherein
both the drawer and the antenna housing are made of a PP material produced by ExxonMobil Corp. added with white color masterbatch (the model of the PP material is AP3N, and the material formed by mixing is opaque and is usually used to manufacture a drawer for a freezing compartment of a refrigerator).

### Embodiment 2

The difference from Embodiment 1 is that both the drawer and the antenna housing are made of a PP material produced by ExxonMobil Corp. (the model of the material is AP3N, and the material is translucent).

### Comparative Example 1

The difference from Embodiment 1 is that both the drawer and the antenna housing are made of a PTFE material produced by Daikin Fluorochemicals Co., Ltd. (the model of the material is M-139, and the material is opaque).

### Comparative Example 2

The difference from Embodiment 1 is that both the drawer and the antenna housing are made of a transparent PC material produced by Bayer Co., Ltd. (the model of the material is 2805, and the material is transparent).

### Comparative Example 3

The difference from Embodiment 1 is that both the drawer and the antenna housing are made of a transparent PS material produced by BASF AG (the model of the material is 165H, and the material is transparent).

### Comparative Example 4

The difference from Embodiment 1 is that the drawer is made of a PS material produced by BASF AG (the model of the material is 165H, and the material is transparent).

Test specification: edible vegetable oil of the same massis respectively put into the drawers of each embodiment and each comparative example; the start temperature of the edible oil is measured; the electromagnetic generating module is enabled to generate electromagnetic wave signals (40.68MHz, 100W) for 5 min, and then, the end temperature of the edible oil is measured.

The test results according to Embodiment 1 to Embodiment 2 and Comparative Example 1 to Comparative Example 4 are shown in Table 1 to Table 6, respectively. In order to improve the test accuracy, two or three samples are respectively put into the heating devices according to Embodiment 1 to Embodiment 2 and Comparative Example 1 to Comparative Example 4 for testing.

**Table 1**

| Test product (PP) | Start temperature (°C) | End temperature (°C) | Temperature rise (°C) |
|---|---|---|---|
| Sample 1 | 22.3 | 34.6 | 12.3 |
| Sample 2 | 22.1 | 34.4 | 12.3 |
| Average | / | / | 12.3 |

**Table 2**

| Test product (PP) | Start temperature (°C) | End temperature (°C) | Temperature rise (°C) |
|---|---|---|---|
| Sample 1 | 22.3 | 34.6 | 12.3 |
| Sample 2 | 22.2 | 34.4 | 12.2 |
| Sample 3 | 22.3 | 34.6 | 12.3 |
| Average | / | / | 12.27 |

**Table 3**

| Test product (PTFE) | Start temperature (°C) | End temperature (°C) | Temperature rise (°C) |
|---|---|---|---|
| Sample 1 | 21.8 | 33.2 | 11.4 |
| Sample 2 | 21.9 | 33.3 | 11.4 |
| Average | / | / | 11.4 |

**Table 4**

| Test product (PC) | Start temperature (°C) | End temperature (°C) | Temperature rise (°C) |
|---|---|---|---|
| Sample 1 | 22.5 | 32.1 | 9.6 |
| Sample 2 | 22.2 | 32.3 | 10.1 |
| Sample 3 | 23.6 | 33.1 | 9.5 |
| Average | / | / | 9.73 |

**Table 5**

| Test product (PS) | Start temperature (°C) | End temperature (°C) | Temperature rise (°C) |
|---|---|---|---|
| Sample 1 | 22 | 33.9 | 11.9 |
| Sample 2 | 22.6 | 34.8 | 12.2 |
| Average | / | / | 12.05 |

**Table 6**

| Test product (PS+PP) | Start temperature (°C) | End temperature (°C) | Temperature rise (°C) |
|---|---|---|---|
| Sample 1 | 22.6 | 34 | 11.4 |
| Sample 2 | 23 | 33.8 | 10.8 |
| Sample 3 | 22.6 | 33.6 | 11 |
| Average | / | / | 11.07 |

It can be seen from the test results in Table 1 to Table 4 that under the condition that the heating time is the same, the temperature increment of the edible vegetable oil in the heating device in which both the drawer and the antenna housing are made of an opaque PP material, the temperature increment of the edible vegetable oil in the heating device in which both the drawer and the antenna housing are made of a translucent PP material, and the temperature increment of the edible vegetable oil in the heating device in which both the drawer and the antenna housing are made of an opaque PTFE material are all much greater than the temperature increment of the edible vegetable oil in the heating device in which both the drawer and the antenna housing are made of a transparent PC material. That is, the opaque PP material, the translucent PP material and the opaque PTFE material have a weaker electromagnetic wave absorption ability than the transparent PC material, and electromagnetic waves have less electromagnetic loss on the opaque PP material, the translucent PP material and the opaque PTFE material.

It can be seen from the test results in Table 1 and Table 5 to Table 6 that under the condition that the heating time is the same, there is little difference among the temperature increment of the edible vegetable oil in the heating device in which both the drawer and the antenna housing are made of an opaque PP material, the temperature increment of the edible vegetable oil in the heating device in which both the drawer and the antenna housing are made of a transparent PS material, and the temperature increment of the edible vegetable oil in the heating device in which the drawer and the antenna housing are respectively made of a transparent PS material and an opaque PP material. That is, the opaque PP material and the transparent PS material have similar electromagnetic wave absorption abilities.

In addition, during the processing of the drawer and the antenna housing in Comparative Example 1, since the opaque PTFE material has poor injection molding properties, the process for manufacturing the drawer and the antenna housing is complicated and high in cost. After the tests of Comparative Example 3 to Comparative Example 4, the drawer and the antenna housing which are made of the transparent PS material are softened significantly. It is tested that the softening point of the transparent PS material is about 80°C, that is, the heat resistance of the transparent PS material is poor. However, after the tests of Embodiment 1 to Embodiment 2, both the drawer and the antenna housing have no visual or tactile softened phenomenon.

The antenna housing 130 may also be configured to fix the radiating antenna 150 to simplify the assembly process of the heating device 100 and facilitate the positioning and installation of the radiating antenna 150. Specifically, the antenna housing 130 may include a clapboard 131 for separating the heating chamber 111 and the electrical appliance chamber 112, and a skirt part 132 fixedly connected with the inner wall of the cylinder body 110, wherein the radiating antenna 150 may be configured to be fixedly connected with the clapboard 131.

In some embodiments, the radiating antenna 150 may be configured to be engaged with the antenna housing 130. Figure 5 is a schematic enlarged view of a region B in Figure 4. Referring to Figure 5, the radiating antenna 150 may be provided with a plurality of engaging holes 151; the antenna housing 130 may be correspondingly provided with a plurality of buckles 133; and the plurality of buckles 133 are configured to respectively pass through the plurality of engaging holes 151 to be engaged with the radiating antenna 150.

In one embodiment of the present invention, each of the buckles 133 may be composed of two barbs disposed at an interval and in mirror symmetry.

Figure 7 is a schematic enlarged view of a region C in Figure 6. Referring to Figure 7, in another embodiment of the present invention, each of the buckles 133 may be composed of a fixing part perpendicular to the radiating antenna 150 and having a hollow middle part, and an elastic part extending inclining to the fixing part from the inner end edge of the fixing part and toward the antenna.

In some other embodiments, the radiating antenna 150 may be configured to be fixed to the antenna housing 130 through an electroplating process.

The antenna housing 130 may further include a plurality of reinforcing ribs, and the reinforcing ribs are configured to connect the clapboard 131 and the skirt part 132 so as to improve the structural strength of the antenna housing 130.

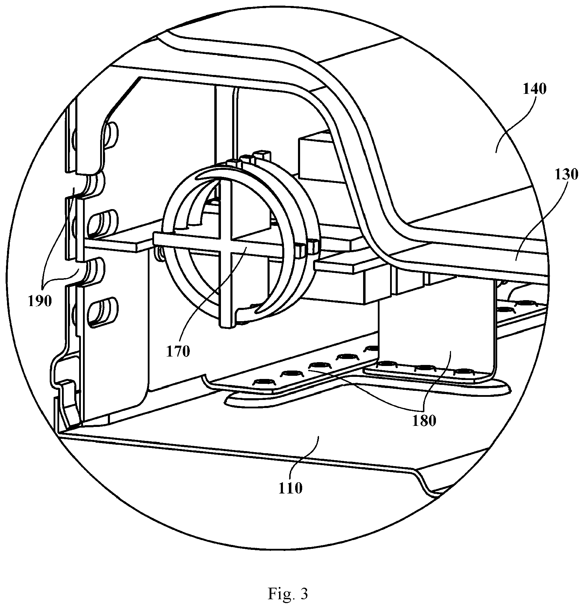

Figure 3 is a schematic enlarged view of a region A in Figure 2. Referring to Figure 1 to Figure 3, the heating device 100 may further include a signal processing and measurement and control circuit 170. Specifically, the signal processing and measurement and control circuit 170 may include a detection unit 171, a control unit 172 and a matching unit 173.

The detection unit 171 may be connected in series between the electromagnetic generating module 161 and the radiating antenna 150, and is configured to detect in real time the specific parameters of incident wave signals and reflected wave signals passing through the detection unit.

The control unit 172 may be configured to acquire the specific parameters from the detection unit 171, and calculate the power of incident waves and reflected waves according to the specific parameters. In the present invention, the specific parameters may be voltage values and/or current values. Alternatively, the detection unit 171 may be a power meter to directly measure the power of incident waves and reflected waves.

The control unit 172 may further calculate an electromagnetic wave absorption rate of the object to be processed according to the power of incident waves and reflected waves, compare the electromagnetic wave absorption rate with a preset absorption threshold, and send an adjusting command to the matching unit 173 when the electromagnetic wave absorption rate is less than the preset absorption threshold. The preset absorption threshold may be 60% to 80%, such as 60%, 70% or 80%.

The matching unit 173 may be connected in series between the electromagnetic generating module 161 and the radiating antenna 150, and is configured to adjust a load impedance of the electromagnetic generating module 161 according to an adjusting command of the control unit 172, so as to improve the matching degree between the output impedance and the load impedance of the electromagnetic generating module 161, so that when foods with different fixed attributes (such as type, weight and volume) are placed in the heating chamber 111, or during the temperature change of the foods, relatively more electromagnetic wave energy is radiated in the heating chamber 111, thereby increasing the heating rate.

In some embodiments, the heating device 100 may be used for thawing. The control unit 172 may also be configured to calculate an imaginary part change rate of a dielectric coefficient of the object to be processed according to the power of incident waves and reflected waves, compare the imaginary part change rate with a preset change threshold, and send a stop command to the electromagnetic generating module 161 when the imaginary part change rate of the dielectric coefficient of the object to be processed is greater than or equal to the preset change threshold, so that the electromagnetic generating module 161 stops working, and the thawing program is terminated.

The preset change threshold may be obtained by testing the imaginary part change rate of the dielectric coefficient of foods with different fixed attributes at -3°C to 0°C, so that the foods have good shear strength. For example, when the object to be processed is raw beef, the preset change threshold may be set to 2.

The control unit 172 may also be configured to receive a user command and control the electromagnetic generating module 161 to start working according to the user command, wherein the control unit 172 is configured to be electrically connected with the power supply module 162 to obtain electric energy from the power supply module 162 and is always in a standby state.

In some embodiments, the signal processing and measurement and control circuit 170 may be integrated on a circuit board and horizontally disposed in the electrical appliance chamber 112 to facilitate the electrical connection between the radiating antenna 150 and the matching module.

The antenna housing 130 and the cylinder body 110 may be provided with heat dissipation holes 190 respectively in positions corresponding to the matching unit 173, so that the heat generated by the matching unit 173 during working is discharged through the heat dissipation holes 190.

In some embodiments, the signal processing and measurement and control circuit 170 may be disposed on the rear side of the radiating antenna 150. The rear part of the bottom wall of the drawer 140 may be configured to be recessed upward so as to form an enlarged space at the lower part thereof. The heat dissipation holes 190 may be formed in the rear walls of the antenna housing 130 and the cylinder body 110.

In some embodiments, the metal cylinder body 110 may be configured to be grounded to discharge the electric charges thereon, thereby improving the safety of the heating device 100.

The heating device 100 may further include a metal bracket 180. The metal bracket 180 may be configured to connect the circuit board and the cylinder body 110 to support the circuit board and discharge the electric charges on the circuit board through the cylinder body 110. In some embodiments, the metal bracket 180 may be composed of two parts perpendicular to each other.

In some embodiments, the electromagnetic generating module 161 and the power supply module 162 may be disposed on the outer side of the cylinder body 110. A part of the metal bracket 180 may be disposed at the rear part of the circuit board and extend vertically along a lateral direction, and may be provided with two wiring ports, so that the wiring terminal of the detection unit 171 (or the matching unit 173) extends out from one wiring port and is electrically connected with the electromagnetic generating module 161; and the wiring terminal of the control unit 172 extends out from the other wiring port and is electrically connected with the electromagnetic generating module 161 and the power supply module 162.

In some embodiments, the heating device 100 may be disposed in a storage compartment of a refrigerator to facilitate users thawing the food.

## Claims

1. A heating device (100), comprising:
a cylinder body (110), provided with a pick-and-place opening;
a door body (120), disposed at the pick-and-place opening and configured to open and close the pick-and-place opening; and
an electromagnetic generating system, at least a part of which is disposed in the cylinder body (110) or accessed into the cylinder body (110), so as to generate electromagnetic waves in the cylinder body (110) to heat an object to be processed, wherein the heating device (100) further comprises:
plastic components (130, 140), disposed on the propagation path of the electromagnetic waves,
wherein the plastic components (130, 140) comprise:
an object carrying vessel, configured to carry the object to be processed, wherein
the pick-and-place opening is formed in a front side wall of the cylinder body (110); and
the object carrying vessel is a drawer capable of sliding along a front-back direction and having an upward opening so as to be convenient for picking and placing the object to be processed, wherein the electromagnetic generating system comprises:
an electromagnetic generating module, configured to generate an electromagnetic wave signal; and
a radiating antenna, disposed in the cylinder body (110) and electrically connected with the electromagnetic generating module to generate electromagnetic waves of a corresponding frequency in the cylinder body (110) according to the electromagnetic wave signal;
wherein the plastic components (130, 140) further comprise:
an antenna housing, configured to separate an inner space of the cylinder body (110) into a heating chamber and an electrical appliance chamber, wherein the object to be processed and the radiating antenna are respectively able to be disposed in the heating chamber and disposed in the electrical appliance chamber;
and the heating device (100) being **characterised in that** the plastic components (130, 140) are made of a non-transparent PP material to reduce the absorption amount of the electromagnetic waves by the plastic components (130, 140).

2. The heating device (100) according to claim 1, wherein
the antenna housing is disposed at a bottom of the cylinder body (110), and the radiating antenna is horizontally fixed on a lower surface of the antenna housing.

3. The heating device (100) according to claim 2, wherein
the radiating antenna is disposed at a height of 1/3 to 1/2 of the cylinder body (110).

4. The heating device (100) according to claim 2, wherein
the radiating antenna is provided with a plurality of engaging holes; and
the antenna housing is correspondingly provided with a plurality of buckles, and the plurality of buckles are configured to respectively pass through the plurality of engaging holes to be engaged with the radiating antenna, wherein
each of the buckles is composed of two barbs disposed at an interval and in mirror symmetry; or
each of the buckles is composed of a fixing part perpendicular to the radiating antenna and having a hollow middle part, and an elastic part extending inclining to the fixing part from an inner end edge of the fixing part and toward the radiating antenna.

5. The heating device (100) according to claim 2, further comprising:
a signal processing and measurement and control circuit, configured to be electrically connected with the electromagnetic generating module, and disposed in the electrical appliance chamber and on a rear side of the radiating antenna.

6. The heating device (100) according to claim 5, wherein the signal processing and measurement and control circuit comprises:
a detection unit (171), connected in series between the electromagnetic generating module and the radiating antenna, and configured to detect specific parameters of an incident wave signal and a reflected wave signal passing through the detection unit (171);
a control unit (172), configured to calculate an electromagnetic wave absorption rate of the object to be processed according to the specific parameters; and
a matching unit (173), connected in series between the electromagnetic generating module and the radiating antenna, and configured to adjust a load impedance of the electromagnetic generating module according to the electromagnetic wave absorption rate.

## Patentansprüche

1. Heizeinrichtung (100), umfassend:
einen Zylinderkörper (110), der mit einer Bestückungsöffnung versehen ist;
einen Türkörper (120), der an der Bestückungsöffnung angeordnet ist und dazu eingerichtet ist, die Bestückungsöffnung zu öffnen und zu schließen; und
ein elektromagnetisches Erzeugungssystem, von dem mindestens ein Teil in dem Zylinderkörper (110) angeordnet ist oder in den Zylinderkörper (110) greift, um elektromagnetische Wellen in dem Zylinderkörper (110) zu erzeugen, um einen zu verarbeitenden Gegenstand zu erhitzen, wobei die Heizeinrichtung (100) ferner umfasst:
Kunststoffkomponenten (130, 140), die auf dem Ausbreitungsweg der elektromagnetischen Wellen angeordnet sind, wobei die Kunststoffkomponenten (130, 140) umfassen:
ein gegenstandtragendes Gefäß, das dazu eingerichtet ist, den zu verarbeitenden Gegenstand zu tragen, wobei
die Bestückungsöffnung in einer Vorderseitenwand des Zylinderkörpers (110) ausgebildet ist; und
das gegenstandtragende Gefäß eine Schublade ist, die in einer Vorne-hinten-Richtung gleitbar ist und eine nach oben öffnende Öffnung aufweist, sodass sie für ein Aufnehmen und Platzieren des zu verarbeitenden Gegenstands geeignet ist, wobei das elektromagnetische Erzeugungssystem umfasst:
ein elektromagnetisches Erzeugungsmodul, das dazu eingerichtet ist, ein elektromagnetisches Wellensignal zu erzeugen; und
eine strahlende Antenne, die in dem Zylinderkörper (110) angeordnet und elektrisch mit dem elektromagnetischen Erzeugungsmodul verbunden ist, um gemäß dem elektromagnetischen Wellensignal elektromagnetische Wellen einer entsprechenden Frequenz in dem Zylinderkörper (110) zu erzeugen; wobei die Kunststoffkomponenten (130, 140) ferner umfassen:
ein Antennengehäuse, das dazu eingerichtet ist, einen Innenraum des Zylinderkörpers (110) in eine Heizkammer und eine Elektrogerätekammer zu unterteilen, wobei der zu verarbeitende Gegenstand und die strahlende Antenne in der Heizkammer beziehungsweise in der Elektrogerätekammer anordenbar sind,
und die Heizeinrichtung (100) **dadurch gekennzeichnet ist, dass** die Kunststoffkomponenten (130, 140) aus einem nicht transparenten PP-Material bestehen, um die Stärke der Absorption der elektromagnetischen Wellen durch die Kunststoffkomponenten (130, 140) zu reduzieren.

2. Heizeinrichtung (100) nach Anspruch 1, wobei
das Antennengehäuse an einem Boden des Zylinderkörpers (110) angeordnet ist und die strahlende Antenne horizontal an einer unteren Fläche des Antennengehäuses befestigt ist.

3. Heizeinrichtung (100) nach Anspruch 2, wobei
die strahlende Antenne auf einer Höhe von 1/3 bis 1/2 des Zylinderkörpers (110) angeordnet ist.

4. Heizeinrichtung (100) nach Anspruch 2, wobei
die strahlende Antenne mit mehreren Eingriffslöchern versehen ist; und
das Antennengehäuse entsprechend mit mehreren Schnallen versehen ist und die mehreren Schnallen dazu eingerichtet sind, jeweils durch die mehreren Eingriffslöcher durchzutreten, um mit der strahlenden Antenne in Eingriff zu treten, wobei
jede der Schnallen aus zwei voneinander beabstandeten und spiegelsymmetrisch angeordneten Widerhaken gebildet ist; oder
jede der Schnallen aus einem Befestigungsteil, das senkrecht zur strahlenden Antenne steht und einen hohlen mittleren Teil aufweist, und einem elastischen Teil, das sich von einer inneren Endkante des Befestigungsteils aus und zur strahlenden Antenne hin zum Befestigungsteil neigt, gebildet ist.

5. Heizeinrichtung (100) nach Anspruch 2, ferner umfassend:
eine Signalverarbeitungs- und Mess- und Steuerungsschaltung, die dazu eingerichtet ist, elektrisch mit dem elektromagnetischen Erzeugungsmodul verbunden zu sein, und in der Elektrogerätekammer hinter der strahlenden Antenne angeordnet ist.

6. Heizeinrichtung (100) nach Anspruch 5, wobei die Signalverarbeitungs- und Mess- und Steuerungsschaltung umfasst:
eine Erfassungseinheit (171), die zwischen dem elektromagnetischen Erzeugungsmodul und der strahlenden Antenne in Reihe verbunden ist und dazu eingerichtet ist, spezifische Parameter eines Signals einer einfallenden Welle und eines Signals einer reflektierten Welle zu erkennen, die die Erkennungseinheit (171) durchlaufen;
eine Steuerungseinheit (172), die dazu eingerichtet ist, eine Absorptionsrate elektromagnetischer Wellen des zu verarbeitenden Gegenstands gemäß den spezifischen Parametern zu berechnen; und
eine Anpassungseinheit (173), die zwischen dem elektromagnetischen Erzeugungsmodul und der strahlenden Antenne in Reihe verbunden ist und dazu eingerichtet ist, eine Lastimpedanz des elektromagnetischen Erzeugungsmoduls gemäß der Absorptionsrate elektromagnetischer Wellen anzupassen.

## Revendications

1. Un dispositif de chauffage (100) comprenant:
un corps de cylindre (110), pourvu d'une ouverture de type pick-and-place;
un corps de porte (120), disposé au niveau de l'ouverture de type pick-and-place et configuré pour ouvrir et fermer l'ouverture de type pick and place; et
un système de génération électromagnétique, dont au moins une partie est disposée dans le corps de cylindre (110) ou accessible dans le corps de cylindre (110), de manière à générer des ondes électromagnétiques dans le corps de cylindre (110) pour chauffer un objet à traiter, dans lequel le dispositif de chauffage (100) comprend en outre:
des composants en plastique (130, 140), disposés sur le trajet de propagation des ondes électromagnétiques,
dans lequel les composants en plastique (130, 140) comprennent:
un récipient porteur d'objets, configuré pour transporter l'objet à traiter, dans lequel
l'ouverture de type pick-and-place est formée dans une paroi latérale avant du corps de cylindre (110); et
le récipient porteur d'objets est un tiroir capable de glisser le long d'une direction avant-arrière et ayant une ouverture vers le haut de manière à être pratique pour retirer et placer l'objet à traiter, dans lequel le système de génération électromagnétique comprend:
un module de génération électromagnétique, configuré pour générer un signal d'onde électromagnétique, et
une antenne rayonnante, disposée dans le corps de cylindre (110) et reliée électriquement au module de génération électromagnétique pour générer des ondes électromagnétiques d'une fréquence correspondante dans le corps de cylindre (110) en fonction du signal d'onde électromagnétique,
dans lequel les composants en plastique (130, 140) comprennent en outre:
un boîtier d'antenne, configuré pour séparer un espace intérieur dans le corps de cylindre (110) en un chambre de chauffage et une chambre d'appareil électrique, dans lequel l'objet à traiter et l'antenne rayonnante peuvent respectivement être disposés dans la chambre de chauffage et disposés dans la chambre d'appareil électrique;
et le dispositif de chauffage (100) étant **caractérisé en ce que** les composants en plastique (130, 140) sont constitués d'un matériau PP non transparent afin de réduire la quantité d'absorption des ondes électromagnétiques par les composants en plastique (130, 140).

2. Le dispositif de chauffage (100) selon la revendication 1, dans lequel
le boîtier d'antenne est disposé au niveau d'une partie inférieure du corps de cylindre (110), et l'antenne rayonnante est fixée horizontalement sur une surface inférieure du boîtier d'antenne.

3. Le dispositif de chauffage (100) selon la revendication 2, dans lequel
l'antenne rayonnante est disposée à une hauteur de 1/3 à 1/2 par rapport au corps de cylindre (110).

4. Le dispositif de chauffage (100) selon la revendication 2, dans lequel
l'antenne rayonnante est pourvue d'une pluralité de trous d'engagement; et
le boîtier d'antenne est pourvu en conséquence d'une pluralité de boucles, et la pluralité de boucles sont configurées pour passer respectivement à travers la pluralité de trous d'engagement pour venir en prise avec l'antenne rayonnante, dans lequel
chacune des boucles est composée de deux ardillons disposés à un intervalle et en symétrie miroir; ou
chacune des boucles est composée d'une partie de fixation perpendiculaire par rapport à l'antenne rayonnante et comportant une partie centrale creuse, et une partie élastique s'étendant vers la partie de fixation à partir d'un bord d'extrémité interne de la partie de fixation et vers l'antenne rayonnante.

5. Le dispositif de chauffage (100) selon la revendication 2, comprenant en outre :
un circuit de traitement, de mesure et de contrôle du signal, configuré pour être connecté électriquement avec le module de génération électromagnétique, et disposé dans la chambre d'appareil électrique et à l'arrière de l'antenne rayonnante.

6. Le dispositif de chauffage (100) selon la revendication 5, dans lequel le circuit de traitement, de mesure et de contrôle du signal comprend:
une unité de détection (171), connectée en série entre le module de génération électromagnétique et l'antenne rayonnante, et configurée pour détecter des paramètres spécifiques d'un signal d'onde incidente et d'un signal d'onde réfléchie traversant l'unité de détection (171),
une unité de commande (172), configurée pour calculer un taux d'absorption d'onde électromagnétique de l'objet à traiter selon les paramètres spécifiques; et
une unité d'appariement (173), connectée en série entre le module de génération électromagnétique et l' antenne rayonnante, et configurée pour ajuster une impédance de charge du module de génération électromagnétique selon le taux d'absorption d'onde électromagnétique.
